# EUROPÄISCHE PATENTSCHRIFT

(11) **EP 4 334 091 B1**
(45) Veröffentlichungstag und Bekanntmachung des Hinweises auf die Patenterteilung: **30.09.2026**
(21) Anmeldenummer: 22731057.0
(22) Anmeldetag: 05.05.2022
(51) Int. Cl.: B25J 9/16

(54) **VERFAHREN ZUM ERSTELLEN VON GREIFERABLAUFPROGRAMMEN**
METHOD FOR CREATING GRIPPING SEQUENCE PROGRAMS
PROCÉDÉ D'ÉLABORATION DE PROGRAMMES SÉQUENTIELS D'ÉLÉMENTS DE PRÉHENSION

(30) Priorität: 07.05.2021 DE 102021002418
(43) Veröffentlichungstag der Anmeldung: 13.03.2024
(73) Patentinhaber: Zimmer, Martin, 77866 Rheinau (DE); Zimmer, Günther, 77866 Rheinau (DE)
(72) Erfinder: Zimmer, Martin, 77866 Rheinau (DE); Zimmer, Günther, 77866 Rheinau (DE)
(74) Vertreter: Thämer, Wolfgang
(86) Internationale Anmeldenummer: PCT/DE2022/000048
(87) Internationale Veröffentlichungsnummer: WO 2022/233352

(56) Entgegenhaltungen:
- DE-A1- 102012 111 701
- DE-A1- 102016 208 362
- US-A1- 2019 077 023
- US-A1- 2020 311 956
- US-B1- 9 687 982
- US-B2- 10 850 393

## Beschreibung

Die Erfindung betrifft ein Verfahren zum Erstellen von greifaufgabenspezifischen Greiferablaufprogrammen eines mittels eines Greifersteuerungsmoduls gesteuerten, einen Greifergrundkörper und mindestens ein Greifwerkzeug aufweisenden angetriebenen Stückgutgreifers.

Aus der DE 10 2019 107 967 B3 ist ein Verfahren zum Einlernen eines an einem Industrieroboter hängenden Greifers bekannt. Hierbei wird durch wiederholtes Greifen eines Stückguts eine erforderliche Greifkraft ermittelt und abgespeichert.

Aus der US 9,687,982 B1 ist ein Roboter bekannt, mit dessen Steuerung unterschiedliche Greifer erkannt und angesteuert werden können. Die Bahnsteuerung des Roboters und die Ansteuerung des Greifers erfolgen mit demselben Programm.

Die DE 10 2016 208 362 A1 offenbart ein Verfahren zur Ermittlung einer Greifgutposition mittels einer Robotersteuerung.

Der vorliegenden Erfindung liegt die Problemstellung zugrunde, sowohl ein Ablaufprogramm für das Schließen des Stückgutgreifers als auch ein Ablaufprogramm für das Öffnen des Stückgutgreifers zu erstellen.

Diese Problemstellung wird mit den Merkmalen des Hauptanspruches gelöst. Dazu überträgt der Stückgutgreifer über eine Signal- und Datenschnittstelle ein greifergrundkörperspezifisches Identifikationssignal an das Greifersteuerungsmodul. Das Greifersteuerungsmodul ordnet diesem greifergrundkörperspezifischen Identifikationssignal aus einer Datenbank einen Greiferdatensatz zu, der für jeden einstellbaren Parameter des Stückgutgreifers jeweils einen zulässigen Wertebereich aufweist. Die Datenbank kann im Greifersteuerungsmodul gespeichert sein oder über ein Datennetz z.B. vom Hersteller des Stückgutgreifers bezogen werden. Mittels der Betätigung des mindestens einen Greifwerkzeugs wird mindestens ein Bezugswert für die Position des mindestens einen Greifwerkzeugs relativ zum Greifergrundkörper ermittelt, wobei der Bezugswert beim Kontaktieren aller Greifwerkzeuge mit einem aufzunehmenden Stückgut oder mit einem Normkörper definierter Länge mittels eines greiferhubabhängigen Sensorsystems des Stückgutgreifers ermittelt wird. Mittels eines Peripheriegeräts wird bei aktiver bidirektionaler Datenschnittstelle mit dem Greifersteuerungsmodul für den montierten Stückgutgreifer ein greifaufgabenspezifischer Konfigurationsdatensatz erstellt. Das Greifersteuerungsmodul prüft die Lage jedes ermittelten Bezugswerts und jedes mittels des Peripheriegeräts eingegebenen Eingabewertes des Konfigurationsdatensatzes innerhalb des zulässigen Wertebereichs des zugehörigen Parameters des Greiferdatensatzes. Das Greifersteuerungsmodul überprüft die Lage einer Kombination mehrerer Werte des Konfigurationsdatensatzes innerhalb eines durch mehrere Parameter bestimmten zulässigen Bereichs des Greiferdatensatzes. Das Greifersteuerungsmodul bestimmt aus den Werten des Konfigurationsdatensatzes und des mindestens einen Bezugswerts greifaufgabenspezifische Sollwerte und Prüfkriterien für ein Ablaufprogramm für das Schließen des Stückgutgreifers und für ein Ablaufprogramm für das Öffnen des Stückgutgreifers.

Eine Recheneinheit des Stückgutgreifers legt aus den Sollwerten den zeitlichen Verlauf der Ansteuerung des Greiferantriebs fest wobei zumindest die Beschleunigung, die Haltedauer und die Verzögerung der Antriebsansteuerung bestimmt wird. Diese Recheneinheit bestimmt aus den Prüfkriterien greiferspezifische Prüfwerte, sodass für jedes Sensorsystem ein physikalischer Prüfwert festgelegt wird.

Die Datenschnittstelle zwischen dem Greifersteuerungsmodul und dem Peripheriegerät bindet das Peripheriegerät in einen Dialog zur Programmerstellung ein. Dabei wird ein Konfigurationsdatensatz erstellt, der geometrische und dynamische Angaben der Greifaufgabe enthält. Die Erstellung des Konfigurationsdatensatzes kann interaktiv mit dem Bediener oder durch Bestätigung von Datenvorschlägen des Greifersteuerungsmoduls erfolgen. Beim Erstellen der Ablaufprogramme für das Öffnen und für das Schließen des Greifers werden gespeicherte greifergrundkörperspezifischen Parameter, Parameter der Greifwerkzeuge sowie der Konfigurationsdatensatz verarbeitet. Die beiden Ablaufprogramme legen die Sollwerte für die Endlagen aller Greifwerkzeuge und die Prüfkriterien zur Erfüllung der jeweiligen Greifaufgabe fest. Aus den Sollwerten werden mittels einer Recheneinheit des Stückgutgreifers u.a. die Beschleunigung, die Haltedauer und die Verzögerung der Antriebsansteuerung bestimmt. Diese Recheneinheit ordnet den Prüfkriterien physikalische Größen zu, die im Stückgutgreifer mittels Sensorsystemen erfasst werden.

Weitere Einzelheiten der Erfindung ergeben sich aus den Unteransprüchen und der nachfolgenden Beschreibung schematisch dargestellter Ausführungsformen.
- Figur 1:: Schema eines Handhabungssystems;
- Figur 2:: Stückgutgreifer;
- Figur 3:: Stückgutgreifer bei teilweise abgenommenen Gehäuse;
- Figur 4:: Abfrage der Greifrichtung;
- Figur 5:: Ermitteln der Greiflänge;
- Figur 6:: Abfrage der Toleranz der Greiflänge;
- Figur 7:: Abfrage der geöffneten Stellung;
- Figur 8:: Abfrage der Greifkraft;
- Figur 9:: Abfrage der Öffnungsgeschwindigkeit.

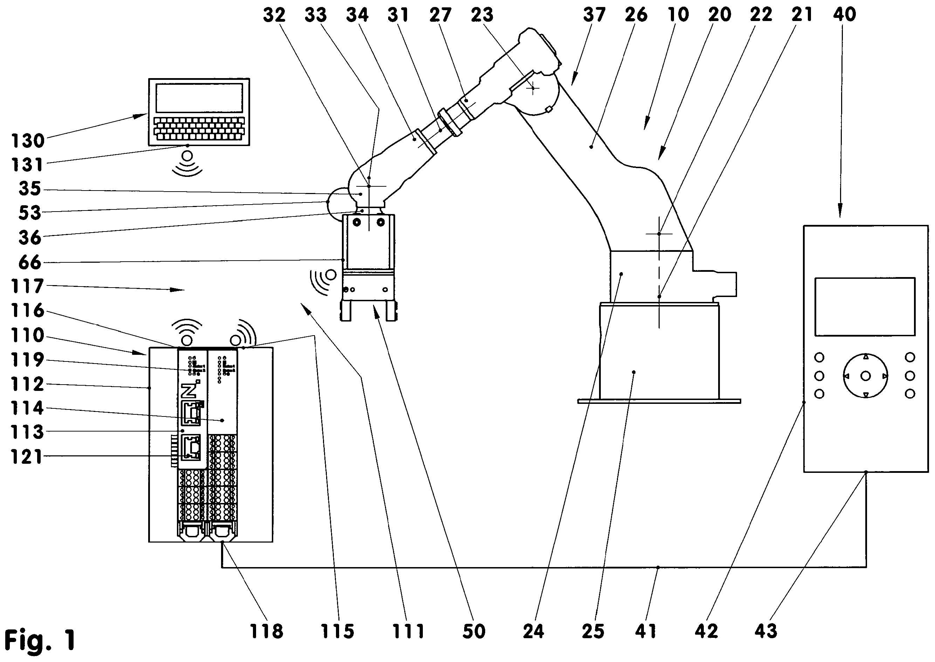

Die Figur 1 zeigt ein Schema eines Handhabungssystems (10) zur Handhabung von Stückgütern (1). Dieses Handhabungssystem (10) umfasst einen Industrieroboter (20), der beispielsweise an seinem auskragenden Arm (37) einen Stückgutgreifer (50) trägt. Zur Steuerung des Industrieroboters (20) wird eine Industrierobotersteuerung (40) eingesetzt. Der Stückgutgreifer (50) wird mittels eines Greifersteuerungsmoduls (110) gesteuert. Hierbei kommuniziert die Industrierobotersteuerung (40) mit dem Greifersteuerungsmodul (110) mittels einer Signalschnittstelle (41).

Der dargestellte Industrieroboter (20) ist ein 6-Achs-Roboter in der Bauform eines Vertikal-Gelenkarm-Roboters. Er hat eine serielle kinematische Struktur in der Bauform einer RRR-Kinematik. Diese umfasst drei rotatorische Hauptachsen (21 - 23). Die Hauptachsen dieses Industrieroboters (20) sind eine A-Achse (21), eine B-Achse (22) und eine C-Achse (23). Die A-Achse (21) umfasst einen Drehtisch (24) mit vertikaler Rotationsachse, der auf einem Sockel (25) angeordnet ist. Der Drehtisch (24) lagert als erstes Kinematikkettenglied einen um die horizontale B-Achse (22) z.B. um 210 Winkelgrade schwenkbaren Fußhebel (26). Am Ende des Fußhebels (26) sitzt als Gelenk mit ebenfalls horizontaler Schwenkachse die C-Achse (23), die den Kniehebel (27) trägt. Der Kniehebel (27) ist relativ zum Fußhebel (26) um z.B. 270 Winkelgrade schwenkbar.

Im Ausführungsbeispiel sind auch die drei Nebenachsen (31 - 33) des Industrieroboters (20) als rotatorische Achsen ausgebildet. Die erste Nebenachse (31), die D-Achse (31), umfasst einen um seine Längsachse drehbaren Tragarm (34), der am freien Ende des Kniehebels (27) gelagert ist. Die zweite Nebenachse (32) ist die E-Achse (32), um die ein Handhebel (35) um z.B. 270 Winkelgrade schwenkbar gelagert ist. Der Handhebel (35) trägt einen um 360 Winkelgrade schwenkbaren Drehteller (36), der um die F-Achse (33) rotierbar gelagert ist. Am Drehteller (36) ist der Stückgutgreifer (50) angeordnet. Hierbei kann der Stückgutgreifer (50) direkt oder mittels eines Adapters am Drehteller (36) gelagert sein. Mittels der genannten Nebenachsen (31 - 33) wird u.a. die Orientierung des Stückgutgreifers (50) bestimmt.

Beim Betrieb des Industrieroboters (20) kann der Stückgutgreifer (50) über eine entsprechende Ansteuerung der einzelnen Achsen (21 - 23, 31 - 33) des Industrieroboters (20) nahezu jede beliebige gerade Strecke oder gekrümmte Linie im Arbeitsraum abfahren. Auch ein anderer Aufbau des Industrieroboters (20), z.B. in der Bauform eines Portalroboters, eines Standsäulenroboters, eines Polarroboters, eines SCARA-Roboters, etc. ist denkbar. Diese Industrieroboter (20) können translatorische Achsen aufweisen. Beispielsweise haben sie dann eine TTT-, RTT- oder RRT-Kinematik. Auch ein Aufbau des Industrieroboters (20) als Tripod, Pentapod oder Hexapod ist denkbar. Diese haben beispielsweise eine Parallelkinematik.

Die Industrierobotersteuerung (40) ist beispielsweise eine speicherprogrammierbare Steuerung. Diese ist z.B. modular aufgebaut und in einem Steuerungsgehäuse (42), z.B. einem Schaltschrank, angeordnet. In dem genannten Steuerungsgehäuse (42) können beispielsweise ein oder mehrere freie Steckplätze für weitere Steuerungsmodule oder Zusatzfunktionsmodule vorgesehen sein. Die speicherprogrammierbare Steuerung ist eine elektronische Steuerung mit einer unabhängig von der Steuerungsaufgabe ausgebildeten internen Verdrahtung. Die Programmierung der speicherprogrammierbaren Steuerung kann als online-Programmierung oder als offline-Programmierung erfolgen. Eine online-Programmierung kann beispielsweise in einem Einlernverfahren erfolgen. Eine offline-Programmierung kann z.B. eine grafisch-interaktive Programmierung sein. Bei dieser Programmierung wird in der speicherprogrammierbaren Steuerung ein Abfolgeprogramm für den Industrieroboter (20) erzeugt oder abgelegt. Dieses Abfolgeprogramm regelt beispielsweise die Bewegungen der einzelnen Gelenke der Haupt- und Nebenachsen des Industrieroboters (20). Das Abfolgeprogramm der Industrierobotersteuerung (40) ist hierbei z.B. als Bahnsteuerung ausgelegt.

Der Industrieroboter (20) ist beispielsweise fest verdrahtet mit der Industrierobotersteuerung (40) verbunden. Über diese Verdrahtung werden beispielsweise Daten und Signale zwischen dem Industrieroboter (20) und der Industrierobotersteuerung (40) in beide Richtungen ausgetauscht. Unter Daten werden im Folgenden wiederinterpretierbare Darstellungen von Informationen in formalisierter Art verstanden, die zur Kommunikation und zur Verarbeitung im Prozess geeignet sind. Dies sind beispielsweise satzweise übertragene Informationspakete, die einen Programmablauf beschreiben oder ein Programmablauf steuern. Als Signale werden im Folgenden binäre Signale verstanden. Dies sind digitale Signale, in denen jedes Signalelement einen von zwei diskreten Werten einnehmen kann. Ein derartiges Signal, z.B. ein Befehlssignal oder ein Statussignal, besteht im Ausführungsbeispiel aus maximal vier Bytes. Beispielsweise werden mittels der Daten die Stromversorgung des Industrieroboters (20) gesteuert. Diese Stromversorgung ist z.B. eine 24 Volt oder 48 Volt-Gleichstromversorgung. Mittels der Stromversorgung des Industrieroboters (20) werden beispielsweise sämtliche Antriebsmotoren des Industrieroboters (20) versorgt. Außerdem ist z.B. am Drehteller (36) ein Stromanschluss für den Stückgutgreifer (50) vorgesehen. Für die Energieversorgung des Stückgutgreifers (50) dient beispielsweise das Gleichstromkabel (53).

An der Industrierobotersteuerung (40) ist ein Schnittstellenufer (43) angeordnet. Dieses Schnittstellenufer (43) ist Teil der Signalschnittstelle (41). Über dieses Schnittstellenufer (43) sind binäre Signale zwischen der Industrierobotersteuerung (40) und dem Greifersteuerungsmodul (110) bidirektional übertragbar. Die zwei Zustände eines Signalelements eines binären Signals sind z.B. "Null" und "Eins". Beispielsweise erfolgt der Signalaustausch auf der Ebene der Maschinensprache. Im Ausführungsbeispiel werden bis zu 12 verschiedene binäre Signale zwischen der Industrierobotersteuerung (40) und dem Greifersteuerungsmodul (110) ausgetauscht.

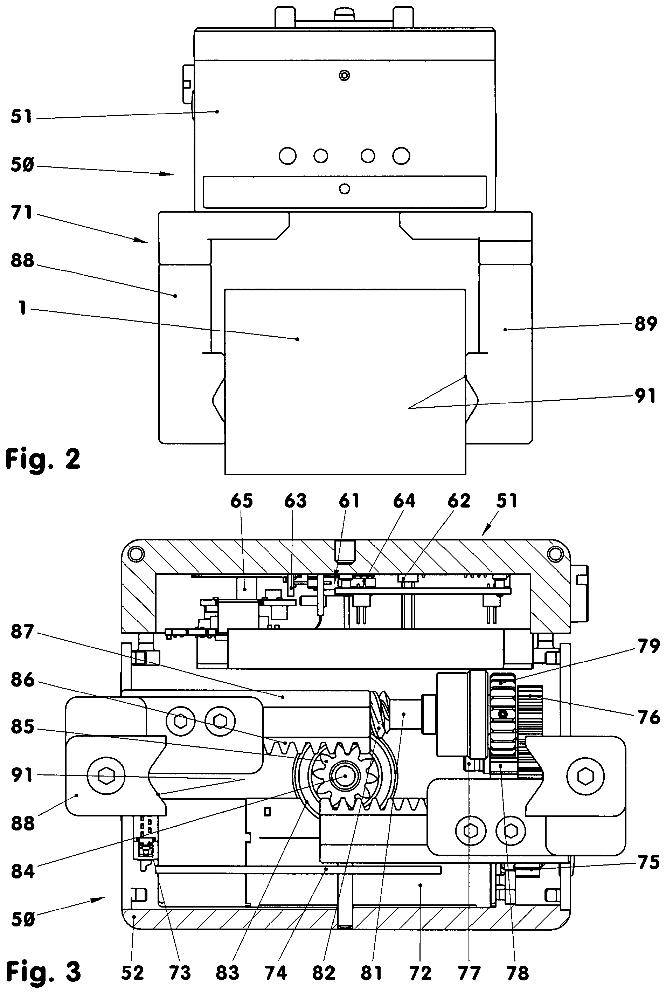

Die Figuren 2 und 3 zeigen einen Stückgutgreifer (50) in einer Ansicht und in einer Draufsicht bei teilweise geschnittenem Greifergehäuse (52). Der dargestellte Stückgutgreifer (50) umfasst einen Greifergrundkörper (51) und zwei Greifwerkzeuge (71). Die Greifwerkzeuge (71) sind z.B. im Greifergrundkörper (51) gelagert und geführt. Es ist auch denkbar, einen Stückgutgreifer (50) mit einem einzigen Greifwerkzeug (71) einzusetzen. Dies kann z.B. ein Sauggreifer, ein Magnetgreifer, etc. sein. Auch kann der Stückgutgreifer (50) mehr als zwei Greifwerkzeuge (71) aufweisen. Diese können gemeinsam oder einzeln relativ zum Greifergrundkörper (51) angetrieben sein.

In diesem Ausführungsbeispiel ist im Greifergehäuse (52) des Greifergrundkörpers (51) eine Elektronikbaugruppe (61) angeordnet. Der Stückgutgreifer (50) kann auch so ausgeführt sein, dass Teile der Elektronikbaugruppe (61) in einem separaten Gehäuse angeordnet sind.

Die Elektronikbaugruppe (61) umfasst in diesem Ausführungsbeispiel einen Energiespeicher (62), eine Recheneinheit (63), eine Speichereinheit (64) und ein Funkmodul (65). Der Energiespeicher (62) wird beispielsweise durch einen in einem Gleichstromkreis eingesetzten Kondensator gebildet. Bei hohen Beschleunigungen der Greifwerkzeuge (71) kann mittels dieses Energiespeichers (62) dem Antriebsmotor (72) der Greifwerkzeuge (71) zusätzliche Energie zur Verfügung gestellt werden. Damit können z.B. Rückwirkungen von Verbrauchsspitzen auf den Industrieroboter (20) reduziert werden.

Gegebenenfalls kann die Betriebsspannung der Elektronikbaugruppe (61) oder einzelner ihrer Komponenten (62 - 65) geringer sein als die über das Gleichstromkabel (53) übertragene Spannung. In diesem Fall umfasst die Elektronikbaugruppe z.B. einen zusätzlichen Spannungswandler.

Die Recheneinheit (63) ist sowohl mit dem Funkmodul (65) als auch mit dem Elektromotor (72) und mit Sensorsystemen (73, 74) des Stückgutgreifers (50) mittels signal- und/oder datenführender Leitungen festverdrahtet verbunden. Mittels der Recheneinheit (63) und der Speichereinheit (64) können beispielsweise Daten, die mittels der Sensorsysteme (73, 74) des Stückgutgreifers (50) erfasst werden, ausgewertet und verdichtet werden. Aus den verdichteten Daten können sich z.B. Angaben über den Verschleiß des Stückgutgreifers (50) oder seiner Komponenten ergeben.

Das Funkmodul (65) hat im Ausführungsbeispiel einen Sender und einen Empfänger. Sowohl der Sender als auch der Empfänger sind beispielsweise für eine Frequenz im Bereich von 2,4 Gigahertz ausgelegt. Auch ein anderer Frequenzbereich, z.B. 5,8 Gigahertz, ist denkbar. Hierbei können sich die jeweiligen Empfangsfrequenzen in diesem Bereich an die Sendefrequenz der Gegenstation anpassen. Die an das Funkmodul (65) angelegte Spannung beträgt beispielsweise 3,1 bis 4,2 Volt. Das vom Funkmodul (65) gebildete bidirektionale Schnittstellenufer (66) ist z.B. asynchron seriell ausgebildet. Als Übertragungsprotokoll wird ein z.B. bei UART, Bluetooth, WLAN, IO-Link^{®} wireless, etc. eingesetztes Übertragungsprotokoll genutzt. Die Zykluszeit der über die als Punkt-zu-Punkt-Verbindung ausgebildete Signal- und Datenschnittstelle (111) zum Greifersteuerungsmodul (110) übertragen Daten ist beispielsweise kleiner als 5 Millisekunden. Die Fehlerrate liegt hierbei z.B. bei 10⁻⁹. Die über die Signal- und Datenschnittstelle (111) übertragenen Daten haben damit eine geringe Verzögerungszeit oder Latenz.

Der Stückgutgreifer (50) hat einen Greiferantrieb, der die Greifwerkzeuge (71) relativ zum Greifergehäuse (52) antreibt. Der Greiferantrieb ist im Ausführungsbeispiel ein Elektromotor (72), z.B. in der Bauform eines Servomotors. Der in diesem Ausführungsbeispiel eingesetzte Elektromotor (72) kann einen angebauten Drehgeber in der Bauform eines Resolvers aufweisen. Auch der Einsatz eines Absolutwertgebers z.B. in Multi-turn-Ausführung, ist denkbar. Ein Absolutwertgeber kann beispielsweise als Kombigeber mit einer asynchronen Ausgangsschnittstelle ausgebildet sein. Mittels eines derartigen Sensors kann sowohl die Drehzahl des Elektromotors (72) als auch, ausgehend von einem Referenzpunkt, die absolute Winkellage der Motorwelle ausgegeben werden. Das Ausgangssignal dieses Sensors ist z.B. ein analoges Signal, das im Bereich zwischen 4 Milliampère und 20 Milliampère liegt.

Im Ausführungsbeispiel wird der an den Elektromotor (72) übertragende Strom mittels eines greifkraftabhängigen Sensorsystems (73) überwacht. Dieses Sensorsystem (73) ist z.B. ein Stromschalter (73). Übersteigt der übertragene Strom einen voreingestellten Schwellenwert, wird die Stromzufuhr des Elektromotors (72) begrenzt oder abgeschaltet. Gleichzeitig meldet dieser Stromschalter (73) dieses Statussignal an die Recheneinheit (63).

Der Elektromotor (72) ist in der Darstellung der Figur 3 querliegend im Greifergehäuse (52) angeordnet. Er hat ein Abtriebsritzel (75), das mit einem Eingangsrad (76) einer Zwischenwelle (77) kämmt. Auf der Zwischenwelle (77) sitzt weiterhin ein Ausgangsrad (78). Dieses Ausgangsrad (78) treibt ein Schneckenwellenrad (79), das auf einer Schneckenwelle (81) sitzt. Das Abtriebsritzel (75), das Eingangsrad (76), das Ausgangsrad (78) und das Schneckenwellenrad (79) sind in diesem Ausführungsbeispiel gradverzahnte Stirnräder. Sie übersetzen die Rotation des Abtriebsritzels (75) mehrstufig ins Langsame.

Die Schneckenwelle (81) trägt eine Schnecke (82), die mit einem zentral im Greifergehäuse (52) gelagerten Schneckenrad (83) kämmt. Das Schneckenrad (83) sitzt auf einer gemeinsamen Welle (84) mit einem gradverzahnten Synchronrad (85). Dieses Synchronrad (85) kämmt mit zwei gegenläufigen Zahnstangen (86), die jeweils Teil eines Schlittens (87) sind. Beispielsweise aufgrund der hohen Gesamtübersetzung der Getriebestufen und des Getriebeaufbaus ist das Getriebe des Stückgutgreifers (50) selbsthemmend. Die beiden Schlitten (87) sind im Greifergehäuse (52) parallel zueinander gleitgelagert verschiebbar. Auch eine Wälzlagerung der Schlitten (87) im Greifergehäuse (52) ist denkbar. Jeder der Schlitten (87) kann auch mittels eines eigenen Elektromotors (72) angetrieben sein. Diese Elektromotoren (72) sind dann beispielsweise so angesteuert, dass ihre Drehzahl- und Positionsinformationen sowohl einzeln, als auch gemeinsam ausgewertet werden. Mit einer derartigen schwimmenden Lagerung der Schlitten (87) kann beispielsweise ein relativ zum Stückgutgreifer (50) außermittig liegendes Stückgut (1) ohne Positionsänderung der Achsen (21 - 23, 31 - 33) des Industrieroboters (20) gegriffen werden.

An mindestens einem der Schlitten (87) und am Greifergehäuse (52) kann ein greiferhubabhängiges Sensorsystem (74) angeordnet sein. Dieses ist z.B. ein absolutes Wegmesssystem. Es umfasst beispielsweise einen codierten Glasmaßstab. Die Codierung kann z.B. als Gray-Code ausgebildet sein. Die Position des Schlittens (87) relativ zum Greifergehäuse (52) wird mittels einer den Glasmaßstab durchleuchtenden Lichtquelle und eines optischen Sensors ermittelt. Mittels dieses absoluten Wegmesssystems (74) können sowohl die Endlagen des Schlittenhubes, als auch jede Zwischenposition in beiden Schlittenhubrichtungen wiederholt angefahren werden. Das absolute Wegmesssystem (74) kann beispielsweise auch mittels eines Positionssensors im Elektromotor (72), eines Absolutgebers, etc. gebildet sein.

An jedem der Schlitten (87) ist ein Greifwerkzeug (71) befestigt. Beispielsweise ist das Greifwerkzeug (71) mit dem jeweiligen Schlitten (87) verschraubt. Im Ausführungsbeispiel umfasst das einzelne Greifwerkzeug (71) ein Greifelement (88) in der Bauform eines Greifbackens (88). Ein derartiger Stückgutgreifer (50) kann zwei, drei oder mehr als drei Greifbacken (88) aufweisen. Hierbei sind zumindest zwei Greifbacken (88) relativ zueinander beweglich ausgebildet. Jede der z.B. L-förmig ausgebildeten Greifbacken (88) hat mindestens eine an einem Greifarm (89) angeordnete Greiffläche (91). Die beiden Greifflächen (91) des dargestellten Parallelgreifers zeigen zur Mittenquerebene des Stückgutgreifers (50). Im Ausführungsbeispiel ist jede der Greifflächen (91) u-förmig ausgebildet. Die einzelne Greiffläche (91) des Außengreifers (140) ist in Richtung der jeweils anderen Greiffläche (91) ausgerichtet.

An jeder der Greifflächen (91) kann ein Kraftsensor befestigt sein oder es können mehrere Kraftsensoren an einer Greiffläche (91) angeordnet sein. Beim Einsatz eines einzelnen Kraftsensors hat dieser beispielsweise einen Durchmesser von 11 Millimetern und eine Höhe von 5 Millimetern. Seine Masse beträgt beispielsweise 10 Gramm. Im Ausführungsbeispiel hat der einzelne, als Drucksensor ausgebildete Kraftsensor einen Messbereich von 0 Newton bis 50 Newton. Seine Speisespannung beträgt z.B. 5 Volt. Der Nennwiderstand des z.B. in eine Wheatstone'sche Brücke eingebundenen Kraftsensors beträgt beispielsweise 350 Ohm. Der Kraftsensor kann an der jeweiligen Greiffläche (91) z.B. angeklebt sein. Zur Vermeidung von Verkantungen kann die Krafteinleitung z.B. zusätzlich zentriert sein. Der Anschluss des Kraftsensors erfolgt beispielsweise mittels eines vieradrigen Kabels. Dieses Kabel verbindet nach der Montage des jeweiligen Greifwerkzeugs (71) den einzelnen Kraftsensor mit der Elektronikbaugruppe (61).

Bei einer Anordnung mehrerer Kraftsensoren an einer Greiffläche (91) können diese als Gruppe in einem matrixartig aufgebauten Feld angeordnet sein. Diese Kraftsensorgruppe hat beispielsweise eine Kraftangriffsfläche von 17 Millimetern auf 17 Millimetern und eine Höhe von 5 Millimetern. Ihre Masse beträgt im Ausführungsbeispiel 5 Gramm. Eine derartige Kraftsensorgruppe hat beispielsweise 36 einzelne Sensoren. Der Kraftmessbereich, die Spannungsversorgung und das Anschlusskabel dieser Gruppe entspricht beispielsweise den entsprechenden Werten des oben beschriebenen einzelnen Kraftsensors. Die maximal zulässige Druckkraft auf die Kraftsensorgruppe und auf den Kraftsensor beträgt beispielsweise das 1,5-fache der maximalen Nennkraft.

Die beiden Greifarme (89) des dargestellten Parallelgreifers sind parallel zueinander ausgerichtet. Der Stückgutgreifer (50) kann jedoch auch als Winkelgreifer, als Nadelgreifer, als Parallelogrammgreifer, etc. ausgebildet sein. Er kann auch als Innengreifer ausgebildet sein. Die Greifwerkzeuge (71) können hierbei zur kraftschlüssigen und/oder zur formschlüssigen Aufnahme von Stückgütern (1) ausgelegt sein. Das einzelne Stückgut (1) ist beispielsweise ein Werkstück. Dieses wird z.B. mittels des Handhabungssystems (10) von einem Magazin zu einer Bearbeitungsmaschine oder in umgekehrter Richtung gefördert. Das Stückgut (1) kann z.B. auch ein spanendes Werkzeug, z.B. ein Fräswerkzeug, Bohrwerkzeug, Sägewerkzeug, etc. sein, das zwischen einer maschinenseitigen Werkzeugaufnahme und einem Werkzeugmagazin transportiert wird. Auch die Aufnahme anderer Arten von Stückgütern (1) ist denkbar.

In der Darstellung der Figur 1 ist neben dem Industrieroboter (20) das Greifersteuerungsmodul (110) angeordnet. Das Greifersteuerungsmodul (110) umfasst z.B. einen Steuerschrank (112) mit darin angeordneten Steuerkarten (113, 114). Die Steuerkarten (113, 114) können auch im Steuerungsgehäuse (42) der Industrierobotersteuerung (40) untergebracht sein. Die Steuerkarten (113, 114) sind mittels der Signalschnittstelle (41) mit der Industrierobotersteuerung (40) verbunden. Gegebenenfalls kann diese binäre Signalschnittstelle (41) auch drahtlos ausgebildet sein. Beispielsweise erfolgt die Energieversorgung des Greifersteuerungsmoduls (110) von der Industrierobotersteuerung (40) aus. Die Energieversorgung des Greifersteuerungsmoduls (110) kann jedoch auch von der Energieversorgung der Industrierobotersteuerung (40) galvanisch getrennt ausgebildet sein. Die Energieversorgung des Greifersteuerungsmoduls (110) kann mittels eines Energiespeichers, z.B. mittels eines Akkumulators, gepuffert sein.

Die Figur 1 zeigt das Schema des Handhabungssystems (10) mit den Schnittstellen (41, 111, 117) und mit einem Peripheriegerät (130). Das Greifersteuerungsmodul (110) hat mindestens ein serielles Schnittstellenufer (115). Über dieses Schnittstellenufer (115) sind drahtlos Daten und Signale mit dem Stückgutgreifer (50) austauschbar. Dieser Austausch erfolgt über die Signal- und Datenschnittstelle (111). Hierfür verfügt das Greifersteuerungsmodul (110) über ein Funkmodul. Dieses Funkmodul ist beispielsweise so aufgebaut wie das im Zusammenhang mit dem Stückgutgreifer (50) beschriebene Funkmodul (65). Das Greifersteuerungsmodul (110) kann weitere derartige Funkmodule zur bidirektionalen Kommunikation mit weiteren Stückgutgreifern (50) aufweisen. Bei diesen Funkmodulen kann beispielsweise die jeweilige Antenne in Richtung des jeweils zugeordneten Stückgutgreifers (50) nachführbar sein. Die jeweilige Polarisationsebene stimmt z.B. mit der Polarisationsebene des Stückgutgreifers (50) überein.

Im Ausführungsbeispiel hat das Greifersteuerungsmodul (110) ein weiteres Schnittstellenufer (116) einer z.B. drahtlosen Datenschnittstelle (117). Diese Datenschnittstelle (117) unterscheidet sich beispielsweise im Frequenzbereich und/oder im eingesetzten Übertragungsprotokoll von den drahtlosen Signal-und Datenschnittstellen (111) zwischen dem Greifersteuerungsmodul (110) und den Stückgutgreifern (50). Das steuerungsseitige Schnittstellufer (116) der Datenschnittstelle (117) wird im Folgenden als steuerungsseitiges bedienerorientiertes Schnittstellenufer (116) bezeichnet. Die Datenschnittstelle (117) ist eine temporäre bedienerseitige Schnittstelle (117). Sie besteht nur nach dem Herstellen einer Datenverbindung zwischen einem bedienerseitigen Peripheriegerät (130) und dem Greifersteuerungsmodul (110). Beim einer Trennung des Peripheriegeräts (130) von der Datenschnittstelle (117) wird diese temporäre Datenschnittstelle (117) abgeschaltet. Die Datenschnittstelle (117) kann auch drahtgebunden ausgebildet sein.

Das Greifersteuerungsmodul (110) umfasst einen Anwendungsrechner und eine Datenspeichereinheit. Der Anwendungsrechner hat beispielsweise drei Prozessoren. Im Ausführungsbeispiel hat ein erster Prozessor eine Taktfrequenz von 264 Megahertz, ein weiterer Prozessor eine Taktfrequenz von 1,2 Gigahertz und der dritte Prozessor eine Taktfrequenz von 1,6 Gigahertz. Hierbei kann der erstgenannte Prozessor beispielsweise für eine externe Direktsteuerung eingesetzt werden. Die Platine des Anwendungsrechners hat z.B. Abmessungen von 30 Millimeter mal 30 Millimeter. Ihre Höhe einschließlich der Bestückung beträgt beispielsweise einen Millimeter. Der Anwendungsrechner ist leitungsmäßig sowohl mit dem binären Schnittstellenufer (118) der Signalschnittstelle (41) als auch mit den drahtlosen Schnittstellenufern (115, 116) der Signal- und Datenschnittstelle (111) und der Datenschnittstelle (117) verbunden. Im Anwendungsrechner und/oder in der Datenspeichereinheit werden z.B. Prozessdaten, Ereignisdaten und Wartungsdaten verarbeitet und gesammelt. Am Greifersteuerungsmodul (110) sind Leuchtdioden (119) zur Anzeige des Betriebszustandes des Anwendungsrechners angeordnet. Außerdem sind am Greifersteuerungsmodul (110) zusätzliche Anschlüsse (121) für drahtgebundene Daten- und/oder Signalübertragungen vorgesehen.

Die an den Anwendungsrechner angeschlossene nicht flüchtige Datenspeichereinheit ist elektrisch gepuffert und hat eine Speicherkapazität von z.B. zweimal 16 Megabyte. Im Ausführungsbeispiel hat sie acht Pins. Ihre Abmessungen betragen beispielsweise 8 Millimeter mal 5,3 Millimeter mal 2 Millimeter.

In diesem Ausführungsbeispiel können auch ein Anwendungsrechner und eine Datenspeichereinheit höherer Kapazität eingesetzt werden. Damit kann z.B. im Anwendungsrechner ein Betriebssystem und/oder eine speicherprogrammierbare Steuerung für den Stückgutgreifer (50) installiert sein. Das Betriebssystem ist beispielsweise ein Echtzeit-Betriebssystem.

Im Greifersteuerungsmodul (110) ist ein Einrichtungsprogramm zur Erstellung von Greiferablaufprogrammen installiert. Das Einrichtungsprogramm ist beispielsweise ein textbasiertes Programm, das stufenweise und/oder schrittweise über die Datenschnittstelle (117) mit dem Peripheriegerät (130) kommuniziert. Beispielsweise ist der Text des Einrichtungsprogramms in einer Hypertext Auszeichnungssprache, z.B. HTML, erstellt. Dieses Einrichtungsprogramm ist z.B. mit verschiedenen Betriebssystemen von Greifersteuerungsmodulen (110), Industrierobotersteuerungen (40) und Peripheriegeräten (130) kombinierbar.

Das Peripheriegerät (130) verfügt über ein Anwenderprogramm für textbasierte Informationsdarstellung. Nach dem Herstellen einer Datenverbindung zum Einrichtungsprogramm über die Datenschnittstelle (117) steuert das Einrichtungsprogramm die Darstellung der Benutzeroberfläche für den Anwender. Das Anwenderprogramm des Peripheriegeräts (130), z.B. ein handelsüblicher Browser, kann betriebssystemneutral ausgebildet sein.

Zur Eingabe von Parametern für das Greifersteuerungsmodul (110) wird als Peripheriegerät (130) beispielsweise ein handelsüblicher transportabler Rechner (130) eingesetzt. Dieser Rechner (130) hat ein Schnittstellenufer (131) der z.B. drahtlosen Datenschnittstelle (117). Die hier zwischen dem Greifersteuerungsmodul (110) und dem Peripheriegerät (130) beschriebene Datenschnittstelle (117) kann z.B. alternativ zwischen dem Peripheriegerät (130) und dem Stückgutgreifer (50) eingerichtet sein. Im letztgenannten Fall kommuniziert der Rechner (130) dann mit dem Stückgutgreifer (50) über das oben genannte handhabungsseitige bedienerorientierte Schnittstellenufer.

Nach dem Aufbau der drahtlosen Datenschnittstelle (117) ruft der Bediener mittels des Rechner (130) ein Konfigurationsprogramm des Einrichtungsprogramms auf. Dies erfolgt beispielsweise während des Stillstands des Handhabungssystems (10). Die Spannungsversorgung des Greifersteuerungsmoduls (110) und des Stückgutgreifers (50) ist eingeschaltet. Die Signal- und Datenschnittstelle (111) zwischen der Greifersteuerungsmodul (110) und dem Stückgutgreifer (50) ist aktiv. Der Stückgutgreifer (50) überträgt ein greifergehäusespezifisches Identifikationssignal an das Greifersteuerungsmodul (110). Das Greifersteuerungsmodul (110) erkennt aus diesem Identifikationssignal z.B. den Greifertyp, den maximalen Hub, die Messbereiche der Sensorsysteme, die maximalen zulässigen Kräfte und Beschleunigungen, etc. Das Greifersteuerungsmodul (110) ordnet diesem Identifikationssignal aus einer Datenbank einen greiferspezifischen Greiferdatensatz zu. Dieser Greiferdatensatz enthält z.B. die technischen Daten und die technisch zulässigen Grenzen beim Einsatz des Stückgutgreifers. Hierbei ist für jeden einstellbaren Parameter des Stückgutgreifers (50) im Greiferdatensatz ein Wertebereich hinterlegt. Auch sind die zulässigen Bereiche beim Zusammenwirken mehrerer Parameter, z.B. Kraft und Weg, hinterlegt. Das Greifersteuerungsmodul (110) übermittelt aus diesem Identifikationssignal beispielsweise die Information an das Peripheriegerät (130), dass es sich bei dem an den Industrieroboter (20) angeschlossenen Stückgutgreifer (50) um einen Parallelgreifer handelt. Dieser kann z.B. elektrisch, pneumatisch oder hydraulisch angetrieben sein. Das greiferseitige Identifikationssignal kann auch Angaben zur Identifikation der Greifwerkzeuge (71) enthalten.

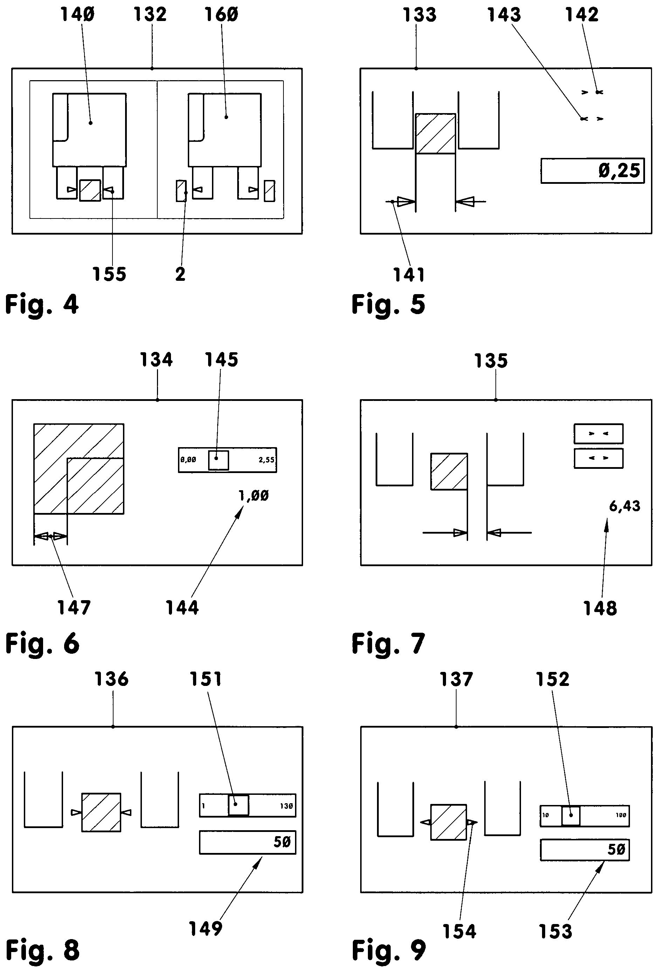

Aufgrund dieser Information wird dem Bediener beispielsweise der Bildschirm (132) nach Figur 4 angezeigt. Auf dem Bildschirm (132) sind zwei Greifersysteme (140, 160) zur Auswahl dargestellt. Das links dargestellte erste Greifersystem (140) ist ein Außengreifer (140). Beim Greifen eines Stückguts (1) kontaktieren die beiden Greifwerkzeuge (71) das Stückgut (1) von außen. Die Greifrichtungen (155) zeigen zueinander. Die jeweilige Greifrichtung (155) ist die Richtung, in die das jeweilige Greifwerkzeug (71) zum Aufnehmen des Stückguts (1) verfährt. Das rechts dargestellte Greifersystem (160) ist ein Innengreifer (160). Beim Aufnehmen des Stückguts (1) legen sich die Greifwerkzeuge (71) an Innenwandungen (2) des Stückguts (1) an. Die Greifrichtungen (155) des Innengreifers (160) zeigen in entgegengesetzte Richtungen. Beispielsweise nach einer Auswahl des Außengreifers (140) durch den Bediener wird dieses erste Datum im Konfigurationsdatensatz abgelegt.

Der Bildschirm (133) nach Figur 5 dient der Ermittlung der Greiflänge (141) für die vorgesehene Greifaufgabe. Die Greiflänge (141) ist der nominale Abstand, den die Greifwerkzeuge (71) beim Aufnehmen des Stückguts (1) haben. Beispielsweise entspricht diese Greiflänge (141) der Länge oder der Breite des Stückguts (1). Im Ausführungsbeispiel wird die Greiflänge (141) durch Antasten beider Greifwerkzeuge (71) an das Stückgut (1) ermittelt. Hierbei dienen z.B. die Tasten (142) zum schrittweisen Schließen des Stückgutgreifers (50). Mittels der Tasten (143) können die Greifwerkzeuge (71) auseinandergefahren werden. Ein einzelner Schaltschritt der schrittweisen Verstellung beträgt beispielsweise 0,01 Millimeter. Sobald alle Greifwerkzeuge (71) das Stückgut (1) kontaktieren, wird der zugehörige Wert des greiferhubabhängigen Sensorsystems (74) registriert und abgespeichert. Dieser Wert ist ein Bezugswert für die Lage der Greifwerkzeuge (71) relativ zum Greifergrundkörper (51) in der Greiferhubrichtung. Beispielsweise werden die nachfolgenden Schritte relativ zu dieser Justierung vorgenommen. In diesem Ausführungsbeispiel entspricht der Bezugswert der Greiflänge (141).

Es ist auch denkbar, zur Ermittlung des Bezugswertes einen Normkörper definierter Länge einzusetzen, der zwischen den Greifwerkzeugen (71) angeordnet wird. Die Greiflänge (141) kann dann, ausgehend von diesem Bezugswert, z.B. mittels direkter numerischer Eingabe oder mittels der Tasten (142, 143) eingestellt werden. Die greifwerkzeugspezifischen Bezugswerte können auch aus einer Greifwerkzeugdatenbank übernommen werden oder direkt eingegeben werden. Bei einem Stückgutgreifer (50) mit einzeln angetriebenen Greifwerkzeugen (71) kann für jedes Greifwerkzeug (71) ein eigener Bezugswert ermittelt werden. Damit ist beispielsweise die Aufnahme eines außermittig liegenden Stückguts (1) denkbar.

Nach der Ermittlung der Greiflänge (141) oder der Eingabe des Wertes der Greiflänge (141) wird mittels des Greifersteuerungsmoduls (110) geprüft, ob der Greiferhub für das angegebene Maß ausgelegt ist. Liegt beispielsweise die Soll-Greiflänge außerhalb des mittels des Greiferhubs erreichbaren Bereichs, wird eine Fehlermeldung ausgegeben. Der Bediener kann für die Greifaufgabe z.B. andere Greifwerkzeuge (71) und/oder einen anderen Stückgutgreifer (50) einsetzen.

Wird in dem Bildschirm nach Figur 4 ein Innengreifer (160) ausgewählt, wird dem Bediener anstatt des in der Figur 5 dargestellten Bildschirms ein entsprechendes symbolisches Bild eines Innengreifers (160) angezeigt. Die Greiflänge (141) ist in diesem Fall der Abstand der außenliegenden Greifflächen (91) beim Aufnehmen des Stückguts (1).

Nach der Eingabe und beispielsweise der Bestätigung der Eingabe des Bildschirms (133) nach Figur 5 wird dem Bediener der Bildschirm (134) nach Figur 6 angezeigt. Die Bildschirmdarstellung der Figur 6 kann identisch für einen Innengreifer (160) und für einen Außengreifer (140) eingesetzt werden. Mittels dieser Bildschirmdarstellung wird die Toleranz (144) des Stückguts (1) für das Maß der Greiflänge (141) abgefragt. Dieser Wert kann entweder numerisch eingegeben werden oder mittels eines Schiebereglers (145) stufenlos verstellt werden. Das Toleranzfeldes (147) ist auf die nominale Greiflänge (141) bezogen. Das Toleranzfeld (147) kann sich von hier aus in der Greifrichtung (155) und in der hierzu entgegengesetzten Richtung erstrecken. Die entsprechende Lage des Toleranzfeldes kann numerisch und/oder visuell angezeigt werden. Bei einer Greiflänge (141) des Stückguts (1) innerhalb des Toleranzfeldes (147) kann der entsprechende angepasste Greiferhub z.B. auf beide Greifwerkzeuge (71) aufgeteilt werden. Bei einer Bestätigung des Toleranzwertes (144) wird dieser Wert im Greifersteuerungsmodul (110) abgespeichert.

Dem Bediener wird nun der Bildschirm (135) mit einer Bildschirmdarstellung nach Figur 7 gezeigt. Die Figur 7 zeigt hierbei die Bildschirmdarstellung für einen Außengreifer (140). Beim Einsatz eines Innengreifers (160) ist die Darstellung entsprechend angepasst. Mit dieser Abfrage nach Figur 7 wird zur Freigabe der Folgefunktionen der Mindestabstand des einzelnen Greifwerkzeugs (71) vom Stückgut (1) nach dem Ablegen des Stückguts (1) ermittelt. Bei der Überprüfung des Eingabewertes wird u.a. geprüft, ob die Summe aus dem Doppelten des eingegebenen Abstandswertes (148) und der Greiflänge (141) kleiner oder gleich dem maximalen Abstand der Greifwerkzeuge (71) in der Offenstellung des Stückgutgreifers (50) ist. Wird beispielsweise versehentlich ein Abstandswert (148) eingegeben, der diese Forderung nicht erfüllt, wird dem Bediener eine Fehlermeldung angezeigt. Anstatt des genannten Abstandswertes (148) kann die Abfrage für die Offenstellung auch den Abstand der Greifwerkzeuge (71) zueinander ermitteln. Unter Berücksichtigung des oben genannten Bezugswertes ergibt sich der Hub der Greifwerkzeuge (71) beim Öffnen des Stückgutgreifers (50). Bei der bedienerseitigen Bestätigung des Abstandswerts (148) wird dieser Wert im Greifersteuerungsmodul (110) als weiterer Wert des Konfigurationsdatensatzes abgespeichert.

Beim Einsatz eines Innengreifers (160) wird bei der Plausibilitätsprüfung ermittelt, ob die Greiflänge (141) größer ist als der doppelte Abstandswert (148). Wird diese Bedingung nicht erfüllt, wird eine Fehlermeldung ausgegeben.

Mit dem Bildschirm (136) nach Figur 8 wird ein Wert für die Anpresskraft (149) der Greifwerkzeuge (71) an das Stückgut (1) abgefragt. Im Ausführungsbeispiel wird ein kraftspezifischer Wert prozentual zu einem Nennwert eingegeben. Die Eingabe kann hierbei numerisch oder über einen Schieberegler (151) erfolgen. Der Nennwert bezeichnet beispielsweise eine maximal zulässige Anpresskraft. Für das anpresskraftspezifische Datum kann z.B. die Kraft in Newton, die Masse des Stückguts (1) in Kilogramm oder der Strom des Elektromotors (72) in Ampère eingegeben werden. Beispielsweise bestimmen die Masse des Stückguts (1) und die Erdbeschleunigung zusammen mit dem Reibungskoeffizienten zwischen den Greifwerkzeugen (71) und dem Stückgut (1) die minimale Anpresskraft (149) beim Aufnehmen des Stückguts (1). Diese Anpresskraft (149) wird im Ausführungsbeispiel durch den Elektromotor (72) erzeugt, dessen Drehmoment mit zunehmendem Ansteuerstrom ansteigt. Dieses Drehmoment bestimmt die Vorschubkraft der Greifwerkzeuge (71) und damit die Anpresskraft (149) der Greifwerkzeuge (71) an das Stückgut (1).

Wird beispielsweise ein maximaler Ansteuerstrom des Elektromotors (72) als anpresskraftspezifischer Wert eingesetzt, kann dieser auch die Ansteuerspannung während des Verfahrens der Greifwerkzeuge (71) bestimmen. Beispielsweise beträgt bei konstanter Motorleistung der Ansteuerstrom beim Schließen des Außengreifers (140) 70 % des maximalen Ansteuerstroms. Hieraus ergibt sich - ohne zusätzlich Steuerung des Magnetfeldes - z.B. eine Läuferspannung und damit eine Mordrehzahl. Damit kann mittels der Angabe eines Wertes für die Anpresskraft (149) auch die Schließgeschwindigkeit des Stückgutgreifers (50) bestimmt werden.

Bei einer Angabe der Anpresskraft kann z.B. die mittels der an den Greifflächen (91) angeordneten Kraftsensoren ermittelte Greifkraft angegeben werden, bei der das Stückgut (1) sicher aufgenommen werden kann. Beispielsweise werden die mittels der greifkraftabhängigen Sensorsysteme (73) beider Greifflächen (91) ermittelten Werte der Greifkräfte addiert. Der jeweilige Betrag der Kraft ist hierbei der Wert, der beispielsweise 20 - 30 Millisekunden nach dem Auftreffen der Greifelemente (88) auf das Stückgut (1) ermittelt wird. Dieser anpresskraftspezifische Wert wird dann zur Auslegung der Ansteuerung der Greifwerkzeuge (71) eingesetzt, wie oben beschrieben.

Bei einem Sauggreifer wird beispielsweise der Ist-Unterdruck ermittelt, bei dem das Stückgut (1) sicher gehalten wird. Mittels dieses Wertes wird im Ablaufprogramm die Ansteuerung der Ansaugpumpe bestimmt. Als greifaufgabenspezifischer Grenzwert des greifkraftabhängigen Sensorsystems (73) wird beispielsweise der oben ermittelte Ist-Unterdruck festgelegt.

Beim Einsatz eines Innengreifers (160) wird ebenfalls ein Wert für die Anpresskraft (149) abgefragt. Die Anpresskraft (149) ist auch in diesem Fall die Summe aller Kräfte, mit denen alle einzelnen Greifwerkzeuge (71) auf das Stückgut (1) drücken.

Nach dem Ablegen des Wertes für die Anpresskraft (149) im Konfigurationsdatensatz wird dem Bediener der Bildschirm (137) nach Figur 9 angezeigt. Mit dieser Abfrage wird die Öffnungsgeschwindigkeit (153) ermittelt. Der Eingabewert kann hierbei beispielsweise mittels eines Schiebereglers (152) oder numerisch erfolgen. Die hiermit gesteuerte physikalische Größe kann eine Ansteuerspannung in Volt, ein Motordrehmoment in Newtonmeter, eine Geschwindigkeit in Metern pro Sekunde, eine Magnetfeldstärke, etc. sein. Im Ausführungsbeispiel wird ein zu einem Maximalwert prozentualer Wert abgefragt. Beispielsweise beim Einsatz eines Gleichstrommotors sind das Motordrehmoment und die Motordrehzahl abhängig von der Motorspannung. Damit ist die Verfahrgeschwindigkeit der Greifwerkzeuge (71) beim Öffnen von den genannten Größen abhängig.

Beim Einsatz eines Innengreifers (160) werden die Greifwerkzeuge (71) beim Öffnen in zueinander zeigende Richtungen bewegt. Die auf dem Bildschirm (137) symbolisch dargestellte Öffnungsrichtung (154) der Greifwerkzeuge (71) ist in diesem Fall nach innen orientiert.

Beispielsweise nach der Bestimmung eines Wertes für die Öffnungsgeschwindigkeit (153) und dessen Abspeicherung im Konfigurationsdatensatz ist die Erstellung des Konfigurationsdatensatzes abgeschlossen. Das Greifersteuerungsmodul (110) prüft die Plausibilität der sich gegenseitig beeinflussenden und/oder eine gemeinsame physikalische Größe beeinflussenden Werte des Konfigurationsdatensatzes auf ihre Plausibilität. Der greifer- und stückgutspezifische Konfigurationsdatensatz wird im Greifersteuerungsmodul (110) gespeichert. Beispielsweise kann der Bediener zum Abschluss die eingegebenen Daten des Konfigurationsdatensatzes bestätigen. Dies kann am Peripheriegerät (130) oder am Greifersteuerungsmodul (110) erfolgen. Anschließend erstellt das Greifersteuerungsmodul (110) unter Berücksichtigung des Konfigurationsdatensatzes, des ermittelten Bezugswertes und der im Datenspeicher hinterlegten Daten des Stückgutgreifers (50) sowohl Sollwerte und Prüfkriterien für ein Ablaufprogramm für das Schließen des Stückgutgreifers (50) als auch Sollwerte und Prüfkriterien für ein Ablaufprogramm für das Öffnen des Stückgutgreifers (50). Diese Ablaufprogramme sind damit jeweils greifaufgabenspezifisch. Das Peripheriegerät (130) kann beispielsweise vom Greifersteuerungsmodul (110) getrennt werden.

Für die Erstellung der Ablaufprogramme wird aus dem erstgenannten Datum des Konfigurationsdatensatzes die Drehrichtung des Elektromotors (72) beim Öffnen des Stückgutgreifers (50) und beim Schließen des Stückgreifers (50) festgelegt. Diese Drehrichtung wird derart festgelegt, dass beim Einsatz eines Außengreifers (140) sich die Greifwerkzeuge (71) beim Schließen aufeinander zu bewegen. Für ein Öffnen des Stückgutgreifers (50) wird die Drehrichtung des Elektromotors (72) in die entgegengesetzte Richtung orientiert. Wurde bei der ersten Abfrage ein Innengreifer (160) angegeben, sind die Drehrichtungen des Elektromotors (72) in die jeweils entgegengesetzte Richtung orientiert.

Aus den eingegebenen Daten für die Greiflänge (141) und für das zugehörige Toleranzfeld (147) wird ein Prüfbereich für das absolute Wegmesssystem (74) des Stückgutgreifers (50) festgelegt. Dies ist ein Grenzwertbereich für das greiferhubabhängige Sensorsystem (74). Hierbei wird als Gutbereich ein Bereich innerhalb des Toleranzfeldes (147) definiert. Wird z.B. bei einem Außengreifer (140) bei Abfrage des absoluten Wegmesssystems (74) ein Wert außerhalb der Greiflänge (141) und ihres Toleranzfeldes (147) festgestellt, wird ein Fehlersignal des Stückgutgreifers (50) an das Greifersteuerungsmodul (110) festgelegt. Dies kann auf ein Stückgut (1) falscher Länge, einen Verschleiß, etc. hinweisen. Ergibt eine Abfrage des absoluten Wegmesssystems (74) bei einem Außengreifer (140) einen Wert, der kleiner ist als der aufgrund des Toleranzfeldes (147) zulässige Wert, wird ein entsprechender, vom Stückgutgreifer (50) an das Greifersteuerungsmodul (110) zu übermittelnden Datensatz erstellt. Ein derartiger Datensatz kann z.B. auf ein Stückgut (1) zu geringer Greiflänge (141) oder auf das Fehlen eines Stückguts (1) hinweisen.

Aus dem im Konfigurationsdatensatz enthaltenen greifkraftabhängigen Wert, z.B. der Anpresskraft (149), bestimmt das Greifersteuerungsmodul (110) einen Grenzwert für das greifkraftabhängige Sensorsystem (73) des Stückgutgreifers (50). Beispielsweise wird der Schaltwert des greifkraftabhängigen Sensorsystems (73) festgelegt, bei dessen Überschreiten z.B. der Strom des Elektromotors (72) begrenzt oder abgeschaltet wird. In dem vom Greifersteuerungsmodul (110) für das Schließen erstellten Algorithmus ist beispielsweise festgelegt, dass beim Schalten des greifkraftabhängigen Sensorsystems (73) eine Abfrage des greifhubabhängigen Sensorsystems (74) erfolgt. Zusätzlich kann z.B. der Geschwindigkeitsgradient abgefragt werden. Wenn die greifereigene Recheneinheit (63) zu diesem Zeitpunkt eine Lage des absoluten Wegmesssystems innerhalb des Toleranzfelds (147) der Greiflänge (141) ermittelt, sendet der Stückgutgreifer (50) ein Bestätigungssignal an das Greifersteuerungsmodul (110). In dem Ablaufprogramm für das Schließen ist weiterhin festgelegt, das das Greifersteuerungsmodul (110) dieses Bestätigungssignal ggf. aufbereitet als Signal an die Industrierobotersteuerung (40) übermittelt.

Aus den genannten Daten des Konfigurationsdatensatzes bestimmt das Greifersteuerungsmodul (110) außerdem die Verfahrgeschwindigkeit der Greifwerkzeuge (71) sowie deren Beschleunigungs- und Verzögerungsphasen. Der Betrag der Verzögerung kann geringer sein als der Betrag der genannten Beschleunigung.

Die so bestimmten Sollwerte und Prüfkriterien werden an die Recheneinheit (63) des Stückgutgreifers (50) übermittelt. Aus den Sollwerten wird beispielsweise die angelegte Motorspannung des Elektromotors (72) über der Zeit bestimmt. Diese bleibt unterhalb des zulässigen Wertes der Motorspannung. Der Motorstrom beim Verfahren ist geringer als der z.B. oben festgelegte Schwellenwert für das greifkraftabhängige Sensorsystem (73).

Beispielsweise beim Einsatz eines pneumatischen oder hydraulischen Stückgutgreifers (50) erfolgt der Greifantrieb mittels eines pneumatischen oder elektrischen Ventils. Aus den vom Greifersteuerungsmodul (110) übermittelten Solldaten bestimmt die greifereigene Rechnereinheit z.B. die elektrische Spannung zur Ansteuerung des Ventils zur Steuerung des pneumatischen oder hydraulischen Volumenstroms zum Verstellen der Greifwerkzeuge (71).

Aus den Prüfkriterien für das Erfüllen der Greifaufgabe bestimmt die Recheneinheit (63) z.B. den Betrag des Signalstroms des analogen Messsystems. Hiermit wird für jedes Sensorsystem (73, 74) aufgrund der Prüfkriterien ein physikalischer Prüfwert festgelegt. Die in der Recheneinheit (63) kumulative Abfrage beider genannter Sensorsysteme (73, 74) beim Schließen des Greifers (50) kann zusätzlich auch die Verminderung der Schließgeschwindigkeit prüfen.

Für den Beginn des Ablaufprogramms für das Schließen bestimmt das Greifersteuerungsmodul (110) ein binäres Befehlssignal der Industrierobotersteuerung (40). Beim Erhalt dieses Signals wird das Schließprogramm gestartet. Gegebenenfalls kann als Option das Starten des Schließprogramms auch z.B. durch eine Tasteneingabe am Steuerschrank (112) des Greifersteuerungsmoduls (110) oder am Peripheriegerät (130) erfolgen. Mittels der beiden letztgenannten Optionen kann beispielsweise ein Probebetrieb durchgeführt werden.

Für das Ablaufprogramm zum Öffnen des Stückgutgreifers (50) wird als Startsignal der Befehlseingang eines Startsignals in Form eines binären Signals der Industrierobotersteuerung (40) festgelegt. Als Optionen z.B. zum Testen des Ablaufprogramms können auch die oben für das Schließen genannten Tasten (142) eingesetzt werden. Bei Erreichen des greifaufgabenspezifischen Schaltwerts des greiferhubabhängigen Sensorsystems (74) wird zum einen der Elektromotor (72) des Stückgutgreifers (50) abgeschaltet, zum anderen sendet der Stückgutgreifer (50) ein Bestätigungssignal an das Greifersteuerungsmodul (110). Im Greifersteuerungsmodul (110) bedeutet der Erhalt dieses Signals das Programmende des Ablaufprogramms für das Öffnen des Greifers (50). Dieses Signal wird, gegebenenfalls umgewandelt, als binäres Freigabesignal für die Folgevorgänge an die Industrierobotersteuerung (40) weitergeleitet. Die Industrierobotersteuerung (40) kann nun die Achsen des Industrieroboters (20) weiter verfahren.

Das Datum der Öffnungsgeschwindigkeit aus dem Konfigurationsdatensatz bestimmt beispielsweise die maximale Ansteuerungsspannung des Elektromotors (72) während des Öffnens. Die Beschleunigung und die Verzögerung an den Enden des Verfahrhubs können z.B. symmetrisch zueinander ausgebildet sein. Auch beim Öffnen des Stückgutgreifers (50) wird die maximale Beschleunigung z.B. durch das zulässige, auf die Motorwelle des Elektromotors (72) reduzierte Massenträgheitsmoment der bewegten Teile des Stückgutgreifers (50) bestimmt. Die so erstellten Programme zum Schließen und zum Öffnen des Greifers (50) werden im Greifersteuerungsmodul (110) gespeichert.

Zur Aufnahme eines Stückguts (1) werden die Achsen (21 - 23; 31 - 33) des Industrieroboters (20) derart bewegt, dass der Greifer (50) in einer Greifposition oberhalb des Stückguts (1) steht. In dieser Lage des Industrieroboters (20) gibt die Industrierobotersteuerung (40) einen Befehl zum Schließen des Stückgutgreifers (50) an das Greifersteuerungsmodul (110). Das Greifersteuerungsmodul (110) startet das Ablaufprogramm zum Schließen des Stückgutgreifers (50). Sobald das Stückgut (1) erfolgreich aufgenommen ist, wird das Ablaufprogramm zum Schließen des Stückgutgreifers (50) beendet. Sobald die Industrierobotersteuerung (40) das Bestätigungssignal des erfolgreichen Greifens erhält, übernimmt sie wieder die Steuerung des Industrieroboters (20). Der Industrieroboter (20) verfährt nun den Stückgutgreifer (50) mit dem daran gehaltenen Stückgut (1) zu einer Entladeposition. Hier sendet die Industrierobotersteuerung (40) - bei stehenden Roboterachsen (21 - 23; 31 - 33) - einen Befehl zum Öffnen des Stückgutgreifers (50) an das Greifersteuerungsmodul (110). Das Ablaufprogramm des Öffnens läuft ab, wie oben beschrieben. Nach Programmende und Erhalt des Freigabesignals übernimmt die Industrierobotersteuerung (40) das weitere Verfahren des Industrieroboters (20).

Im Greifersteuerungsmodul (110) werden die Betriebsdaten und Fehlermeldungen des Stückgutgreifers (50) gesammelt und verdichtet. Beispielsweise werden diese Betriebsdaten und Fehlermeldungen textbasiert gespeichert. Bei Anschluss des Peripheriegeräts (130) an das Greifersteuerungsmodul (110) können diese Betriebsdaten und Fehlermeldungen mittels des Peripheriegeräts (130) ausgelesen werden. Hierbei kann auf Seiten des Peripheriegeräts (130) das oben genannte Anwenderprogramm eingesetzt werden.

Das Greifersteuerungsmodul (110) kann die erstellten Ablaufprogramme optimieren. Beispielsweise kann bei wiederholtem Greifen das Toleranzfeld (147) des Stückguts (1) genauer festgelegt werden. Damit kann beispielsweise auch der Startpunkt der Verzögerungsrampe verlegt werden, um das Zeitintervall des Aufnehmens des Stückguts (1) zu beschleunigen.

Das Ablaufprogramm kann auch so ausgebildet sein, dass die eingesetzte Anpresskraft selbstlernend optimiert wird. So kann beispielsweise die Anpresskraft der Greifwerkzeuge (71) an das Stückgut (1) erhöht werden, wenn eine Querkraftkomponente auf den Kraftsensoren der Greifflächen (91) einen vorgegebenen Grenzwert überschreitet. Die Kraftsensoren sind hierfür beispielsweise als 2-D- oder als 3-D-Kraftsensoren ausgebildet. Hiermit wird z.B. ein Rutschen des Stückguts (1) auch bei Änderungen der Umgebungsbedingungen, z.B. der Luftfeuchtigkeit oder der temperaturabhängigen Werkstofffestigkeit, verhindert.

Auch Kombinationen der einzelnen Ausführungsbeispiele sind denkbar.

### Bezugszeichenliste:

- 1: Stückgut
- 2: Innenwandungen

- 10: Handhabungssystem

- 20: Industrieroboter
- 21: A-Achse
- 22: B-Achse
- 23: C-Achse
- 24: Drehtisch
- 25: Sockel
- 26: Fußhebel
- 27: Kniehebel

- 31: Nebenachse, D-Achse
- 32: Nebenachse, E-Achse
- 33: Nebenachse, F-Achse
- 34: Tragarm
- 35: Handhebel
- 36: Drehteller
- 37: Arm von (20)

- 40: Industrierobotersteuerung
- 41: Signalschnittstelle
- 42: Steuerungsgehäuse
- 43: Schnittstellenufer

- 50: Stückgutgreifer, Greifer
- 51: Greifergrundkörper
- 52: Greifergehäuse
- 53: Gleichstromkabel
- 61: Elektronikbaugruppe
- 62: Energiespeicher
- 63: Recheneinheit
- 64: Speichereinheit
- 65: Funkmodul
- 66: Schnittstellenufer, handhabungsseitiges steuerungsorientiertes Schnittstellenufer

- 71: Greifwerkzeug
- 72: Antriebsmotor, Elektromotor
- 73: greifkraftabhängiges Sensorsystem, Stromsensor, Stromschalter
- 74: greiferhubabhängiges Sensorsystem, absolutes Wegmesssystem
- 75: Abtriebsritzel
- 76: Eingangsrad
- 77: Zwischenwelle
- 78: Ausgangsrad
- 79: Schneckenwellenrad

- 81: Schneckenwelle
- 82: Schnecke
- 83: Schneckenrad
- 84: Welle
- 85: Synchronrad
- 86: Zahnstangen
- 87: Schlitten
- 88: Greifelement, Greifbacke
- 89: Greifarm

- 91: Greiffläche

- 110: Greifersteuerungsmodul
- 111: Signal- und Datenschnittstelle
- 112: Steuerschrank
- 113: Steuerkarte
- 114: Steuerkarte
- 115: serielles Schnittstellenufer für (111)
- 116: Schnittstellenufer, steuerungsseitiges bedienerorientiertes Schnittstellenufer
- 117: Datenschnittstelle, Bedienerschnittstelle
- 118: binäres Schnittstellenufer
- 119: Leuchtdioden

- 121: Anschlüsse

- 130: Peripheriegerät, Rechner
- 131: Schnittstellenufer
- 132: Bildschirm für die Bestimmung der Verfahrrichtungen
- 133: Bildschirm zur Ermittlung der Greiflänge
- 134: Bildschirm für die Wahl eines Toleranzfeldes der Greiflänge
- 135: Bildschirm für die Wahl des Abstands der Greifelemente beim Ablegen des Stückguts
- 136: Bildschirm für die Abfrage der Anpresskraft
- 137: Bildschirm für die Abfrage der Öffnungsgeschwindigkeit

- 140: Greifersystem Außengreifer
- 141: Greiflänge
- 142: Taste
- 143: Taste
- 144: Toleranz, Toleranzwert
- 145: Schieberegler
- 147: Toleranzfeld
- 148: Abstandswert
- 149: Anpresskraft
- 151: Schieberegler
- 152: Schalttasten
- 153: Öffnungsgeschwindigkeit
- 154: Öffnungsrichtung
- 155: Greifrichtung

- 160: Greifersystem Innengreifer

## Patentansprüche

1. Verfahren zum Erstellen von greifaufgabenspezifischen Greiferablaufprogrammen eines mittels eines Greifersteuerungsmoduls (110) gesteuerten, einen Greifergrundkörper (51) und mindestens ein Greifwerkzeug (71) aufweisenden angetriebenen Stückgutgreifers (50),
- wobei der Stückgutgreifer (50) über eine Signal- und Datenschnittstelle (111) ein greifergrundkörperspezifisches Identifikationssignal an das Greifersteuerungsmodul (110) überträgt,
- wobei das Greifersteuerungsmodul (110) diesem greifergrundkörperspezifischen Identifikationssignal aus einer Datenbank einen Greiferdatensatz zuordnet, der für jeden einstellbaren Parameter des Stückgutgreifers (50) jeweils einen zulässigen Wertebereich aufweist,
- wobei mittels Betätigung des mindestens einen Greifwerkzeugs (71) mindestens ein Bezugswert für die Position des mindestens einen Greifwerkzeugs (71) relativ zum Greifergrundkörper (51) ermittelt wird, wobei der Bezugswert beim Kontaktieren aller Greifwerkzeuge (71) mit einem aufzunehmenden Stückgut (1) oder mit einem Normkörper definierter Länge mittels eines greiferhubabhängigen Sensorsystems (74) des Stückgutgreifers (50) ermittelt wird,
- wobei mittels eines Peripheriegeräts (130) bei aktiver bidirektionaler Datenschnittstelle (117) mit dem Greifersteuerungsmodul (110) für den montierten Stückgutgreifer (50) ein greifaufgabenspezifischer Konfigurationsdatensatz erstellt wird,
- wobei das Greifersteuerungsmodul (110) die Lage jedes ermittelten Bezugswerts und jedes mittels des Peripheriegeräts (130) eingegebenen Eingabewertes des Konfigurationsdatensatzes innerhalb des zulässigen Wertebereichs des zugehörigen Parameters des Greiferdatensatzes prüft,
- wobei das Greifersteuerungsmodul (110) die Lage einer Kombination mehrerer Werte des Konfigurationsdatensatzes innerhalb eines durch mehrere Parameter bestimmten zulässigen Bereichs des Greiferdatensatzes überprüft,
- wobei das Greifersteuerungsmodul (110) aus den Werten des Konfigurationsdatensatzes und des mindestens einen Bezugswerts greifaufgabenspezifische Sollwerte und Prüfkriterien für ein Ablaufprogramm für das Schließen des Stückgutgreifers (50) und für ein Ablaufprogramm für das Öffnen des Stückgutgreifers (50) bestimmt,
- wobei eine Recheneinheit (63) des Stückgutgreifers (50) aus den Sollwerten den zeitlichen Verlauf der Ansteuerung des Greiferantriebs festlegt, wobei zumindest die Beschleunigung, die Haltedauer und die Verzögerung der Antriebsansteuerung bestimmt wird und
- wobei die Recheneinheit (63) aus den Prüfkriterien greiferspezifische Prüfwerte bestimmt, sodass für jedes Sensorsystem (73, 74) ein physikalischer Prüfwert festgelegt wird.

2. Verfahren nach Anspruch 1, **dadurch gekennzeichnet, dass** das Greifersteuerungsmodul (110) für die Erstellung des Konfigurationsdatensatzes ein textbasiertes Eingabeprogramm aufweist, das bei aktivierter Datenschnittstelle (117) mit einem Anwenderprogramm des Peripheriegeräts (130) kommuniziert.

3. Verfahren nach Anspruch 1, **dadurch gekennzeichnet, dass** die einzelnen Daten des Konfigurationsdatensatzes schrittweise drahtlos vom Peripheriegerät (130) an das Greifersteuerungsmodul (110) übertragen werden.

4. Verfahren nach Anspruch 1, **dadurch gekennzeichnet, dass** der Konfigurationsdatensatz zumindest aus der Auswahl einer Greifrichtung (155) mindestens zweier Greifwerkzeuge (71), aus dem Toleranzwert (144) eines zu greifenden Stückgutes (1), aus einem numerischen Abstandswert (148) für die geöffneten Greifwerkzeuge (71) zueinander, einem Relativwert für die Anpresskraft (149) in der Greifposition und einem Relativwert für die Öffnungsgeschwindigkeit (153) der Greifwerkzeuge (71) besteht.

5. Verfahren nach Anspruch 4, **dadurch gekennzeichnet, dass** das Greifersteuerungsmodul (110) aus der Angabe der Greifrichtung (155) für den Greiferantrieb die Drehrichtung eines Antriebsmotors (72) des Stückgutgreifers (50) beim Schließen des Stückgutgreifers (50) und die Drehrichtung beim Öffnen des Stückgutgreifers (50) festlegt.

6. Verfahren nach Anspruch 1, **dadurch gekennzeichnet, dass** das Greifersteuerungsmodul (110) aus dem Konfigurationsdatensatz für das Ablaufprogramm beim Schließen einen Grenzwert für das greiferhubabhängiges Sensorsystem (74) sowie einen Grenzwert für ein greifkraftabhängiges Sensorsystem (73) des Stückgutgreifers (50) ermittelt.

7. Verfahren nach Anspruch 6, **dadurch gekennzeichnet, dass** der Grenzwert des greifkraftabhängigen Sensorsystems (73) den Motorstrom eines Antriebsmotors (72) des Stückgutgreifers (50) begrenzt.

8. Verfahren nach Anspruch 1, **dadurch gekennzeichnet, dass** das Greifersteuerungsmodul (110) aus dem Konfigurationsdatensatz einen Grenzwert für das greiferhubabhängiges Sensorsystem (74) für das Ablaufprogramm beim Öffnen des Stückgutgreifers (50) ermittelt.

9. Verfahren nach Anspruch 1, **dadurch gekennzeichnet, dass** der Stückgutgreifer (50) an einem, mittels einer Industrierobotersteuerung (40) gesteuerten Industrieroboter (20) angeordnet ist, wobei die Industrierobotersteuerung (40) und das Greifersteuerungsmodul (110) eine Signalschnittstelle (41) haben, **dadurch gekennzeichnet, dass** nach Übertragung eines Befehls von der Industrierobotersteuerung (40) über die Signalschnittstelle (41) an das Greifersteuerungsmodul (110) entweder das Ablaufprogramm zum Schließen des Stückgutgreifers (50) oder das Ablaufprogramm zum Öffnen des Stückgutgreifers (50) gestartet wird.

## Claims

1. A method for creating gripping-task-specific gripper sequence programs for a driven item gripper (50) which is controlled by means of a gripper control module (110) and has a gripper main body (51) and at least one gripping tool (71),
- wherein the item gripper (50) transmits a gripper-main-body-specific identification signal to the gripper control module (110) via a signal and data interface (111),
- wherein the gripper control module (110) assigns a gripper data set from a database to this gripper-main-body-specific identification signal, which gripper data set has an allowable value range for each settable parameter of the item gripper (50),
- wherein, by actuating the at least one gripping tool (71), at least one reference value for the position of the at least one gripping tool (71) relative to the gripper main body (51) is ascertained, wherein the reference value is ascertained when all gripping tools (71) come into contact with an item (1) to be picked up, or is ascertained with a standard body of defined length by means of a gripper-stroke-dependent sensor system (74) of the item gripper (50),
- wherein, by means of a peripheral device (130) whilst the bidirectional data interface (117) with the gripper control module (110) is active, a gripping-task-specific configuration data set for the mounted item gripper (50) is created,
- wherein the gripper control module (110) checks the position of each reference value ascertained and each input value of the configuration data set entered via the peripheral device (130) within the allowable value range of the associated parameter of the gripper data set,
- wherein the gripper control module (110) checks the position of a combination of multiple values of the configuration data set within an allowable range of the gripper data set determined by multiple parameters,
- wherein the gripper control module (110) determines, from the values of the configuration data set and the at least one reference value, gripping-task-specific target values and test criteria for a sequence program for closing the item gripper (50) and for a sequence program for opening the item gripper (50),
- wherein a processing unit (63) of the item gripper (50) establishes the time profile of the actuation of the gripper drive from the target values, wherein at least the acceleration, the holding time and the deceleration of the actuation of the drive are determined, and
- wherein the processing unit (63) determines gripper-specific test values from the test criteria, so that that a physical test value is established for each sensor system (73, 74).

2. The method according to claim 1, **characterized in that** the gripper control module (110) has a text-based input program for creating the configuration data set, which input program communicates with a user program of the peripheral device (130) when the data interface (117) is activated.

3. The method according to claim 1, **characterized in that** individual data of the configuration data set are transmitted wirelessly step by step from the peripheral device (130) to the gripper control module (110).

4. The method according to claim 1, **characterized in that** the configuration data set consists at least of the selection of a gripping direction (155) of at least two gripping tools (71), the tolerance value (144) of an item (1) to be gripped, a numerical distance value (148) for the open gripping tools (71) relative to one another, a relative value for the contact force (149) in the gripping position, and a relative value for the opening speed (153) of the gripping tools (71).

5. The method according to claim 4, **characterized in that** the gripper control module (110) establishes the direction of rotation of a drive motor (72) of the item gripper (50) when the item gripper (50) is closing and the direction of rotation when the item gripper (50) is opening from the indication of the gripper direction (155) for the gripper drive.

6. The method according to claim 1, **characterized in that** the gripper control module (110) ascertains a threshold value for the gripper-stroke-dependent sensor system (74) as well as a threshold value for a gripping-force-dependent sensor system (73) of the item gripper (50) from the configuration data set for the sequence program during closing.

7. The method according to claim 6, **characterized in that** the threshold value of the gripping-force-dependent sensor system (73) limits the motor current of a drive motor (72) of the item gripper (50).

8. The method according to claim 1, **characterized in that** the gripper control module (110) ascertains, from the configuration data set, a limit value for the gripper-stroke-dependent sensor system (74) for the sequence program when opening the item gripper (50).

9. The method according to claim 1, **characterized in that** the item gripper (50) is arranged on an industrial robot (20) controlled by means of an industrial robot controller (40), wherein the industrial robot controller (40) and the gripper control module (110) have a signal interface (41), **characterized in that**, after the transmission of a command from the industrial robot controller (40) via the signal interface (41) to the gripper control module (110), either the sequence program for closing the item gripper (50) or the sequence program for opening the item gripper (50) is started.

## Revendications

1. Procédé, destiné à créer des programmes séquentiels de préhenseurs spécifiques à une tâche de préhension pour un préhenseur (50) de marchandises unitaires entraîné, commandé au moyen d'un module de commande (110) de préhenseur, comportant un corps de base (51) de préhenseur et au moins un outil de préhension (71),
- le préhenseur (50) de marchandises unitaires transmettant par l'intermédiaire d'une interface de signaux et de données (111) un signal d'identification spécifique au corps de base de préhenseur au module de commande (110) de préhenseur,
- le module de commande (110) de préhenseur affectant audit signal d'identification spécifique au corps de base de préhenseur à partir d'une base de données un jeu de données de préhenseur qui pour chaque paramètre réglable du préhenseur (50) de marchandises unitaires comporte respectivement une plage de valeurs admissibles,
- au moyen d'un actionnement de l'au moins un outil de préhension (71) étant déterminée au moins une valeur de référence pour la position de l'au moins un outil de préhension (71) par rapport au corps de base (51) de préhenseur, la valeur de référence étant déterminée lors de la mise en contact de tous les outils de préhension (71) avec une marchandise unitaire (1) qui doit être reprise ou avec un corps étalon d'une longueur définie, au moyen d'un système de capteurs (74) du préhenseur (50) de marchandises unitaires qui dépend de la course du préhenseur,
- au moyen d'un périphérique (130), lorsque l'interface de données (117) bidirectionnelle est active, à l'aide du module de commande (110) de préhenseur, un jeu de données de configuration spécifique aux tâches de préhension étant créé pour le préhenseur (50) de marchandises unitaires monté,
- le module de commande (110) de préhenseur vérifiant la situation de chaque valeur de référence déterminée et de chaque valeur d'entrée du jeu de données de configuration saisie au moyen du périphérique (130) à l'intérieur de la plage de valeurs autorisées du paramètre correspondant du jeu de données de préhenseur,
- le module de commande (110) de préhenseur examinant la situation d'une combinaison de plusieurs valeurs du jeu de données de configuration à l'intérieur d'une plage autorisée du jeu de données de préhenseur fixée par plusieurs paramètres,
- le module de commande (110) de préhenseur fixant à partir des valeurs du jeu de données de configuration et de l'au moins une valeur de référence des valeurs de consigne spécifiques à la tâche de préhension et des critères de vérification pour un programme séquentiel pour la fermeture du préhenseur (50) de marchandises unitaires et pour un programme séquentiel pour l'ouverture du préhenseur (50) de marchandises unitaires,
- une unité de calcul (63) du préhenseur (50) de marchandises unitaires établissant à partir des valeurs de consigne l'évolution temporelle pilotage de l'entraînement du préhenseur, au moins l'accélération, la durée de maintien et la temporisation du pilotage de l'entraînement étant fixés et
- l'unité de calcul (63) fixant à partir des critères de vérification des valeurs de vérification spécifiques au préhenseur, de sorte que pour chaque système de capteurs (73, 74) soit établie une valeur de vérification physique.

2. Procédé selon la revendication 1, **caractérisé en ce que** le module de commande (110) de préhenseur comporte, pour la création du jeu de données de configuration un programme de saisie textuelle, qui lorsque l'interface de données (117) est activée, communique avec un programme utilisateur du périphérique (130).

3. Procédé selon la revendication 1, **caractérisé en ce que** les données individuelles du jeu de données de configuration sont transmises étape par étape sans fil du périphérique (130) au module de commande (110) de préhenseur.

4. Procédé selon la revendication 1, **caractérisé en ce que** le jeu de données de configuration est constitué d'au moins la sélection d'une direction de préhension (155) d'au moins deux outils de préhension (71), de la valeur de tolérance (144) d'une marchandise unitaire (1) qui doit être prise, d'une valeur numérique d'écart (148) mutuel pour les outils de préhension (71) ouverts, d'une valeur relative pour la force d'appui (149) dans la position de préhension et d'une valeur relative pour la vitesse d'ouverture (153) des outils de préhension (71).

5. Procédé selon la revendication 4, **caractérisé en ce que** le module de commande (110) de préhenseur établit, à partir de l'indication de direction de préhension (155) pour l'entraînement du préhenseur la vitesse de rotation d'un moteur d'entraînement (72) du préhenseur (50) de marchandises unitaires lors de la fermeture du préhenseur (50) de marchandises unitaires et la vitesse de rotation lors de l'ouverture du préhenseur (50) de marchandises unitaires.

6. Procédé selon la revendication 1, **caractérisé en ce que** le module de commande (110) de préhenseur détermine à partir du jeu de données de configuration pour le programme séquentiel lors de la fermeture une valeur limite pour le système de capteurs (74) dépendant de la course du préhenseur, ainsi qu'une valeur limite pour un système de capteurs (73) d préhenseur (50) de marchandises unitaires qui dépende de la force de préhension.

7. Procédé selon la revendication 6, **caractérisé en ce que** la valeur limite du système de capteurs (73) dépendant de la force de préhension limite le courant du moteur d'un moteur d'entraînement (72) du préhenseur (50) de marchandises unitaires.

8. Procédé selon la revendication 1, **caractérisé en ce que** le module de commande (110) de préhenseur détermine à partir du jeu de données de configuration une valeur limite pour le système de capteurs (74) dépendant de la course du préhenseur pour le programme séquentiel lors de l'ouverture du préhenseur (50) de marchandises unitaires.

9. Procédé selon la revendication 1, **caractérisé en ce que** le préhenseur (50) de marchandises unitaires est placé sur un robot industriel (20) commandé au moyen d'un système de commande (40) de robot industriel, le système de commande (40) de robot industriel et le module de commande (110) de préhenseur détenant une interface de signaux (41), **caractérisé en ce qu'**après la transmission d'un ordre de la part du système de commande (40) de robot industriel par l'intermédiaire de l'interface de signaux (41) vers le module de commande (110) de préhenseur, soit le programme séquentiel pour la fermeture du préhenseur (50) de marchandises unitaires ou le programme séquentiel pour l'ouverture du préhenseur (50) de marchandises unitaires est démarré.
